(19) Europäisches Patentamt
European Patent Office
Office européen des brevets

(11) **EP 4 734 387 A1**

(12) **EUROPEAN PATENT APPLICATION**
published in accordance with Art. 153(4) EPC

(43) Date of publication:
**29.04.2026 Bulletin 2026/18**

(21) Application number: **24830470.1**

(22) Date of filing: **11.06.2024**

(51) International Patent Classification (IPC):
**H04B 7/0456** (2017.01)

(52) Cooperative Patent Classification (CPC):
**H04B 7/0456; H04B 7/145**

(86) International application number:
**PCT/CN2024/098382**

(87) International publication number:
**WO 2025/001824 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 CN 202310793275**

(71) Applicant: ZTE Corporation
Shenzhen, Guangdong 518057 (CN)

(72) Inventors:
• YE, Zhengzheng
  Shenzhen, Guangdong 518057 (CN)
• LIU, Ming
  Shenzhen, Guangdong 518057 (CN)
• LIU, Huailin
  Shenzhen, Guangdong 518057 (CN)

(74) Representative: **Ziebig Hengelhaupt Intellectual
Property Attorneys
Patentanwaltskanzlei PartGmbB
Leipziger Straße 49
10117 Berlin (DE)**

(54) **CODEBOOK GENERATION METHOD AND SYSTEMS, COMMUNICATION APPARATUS AND STORAGE MEDIUM**

(57)     The present disclosure provides a codebook generation method and systems, a communication apparatus, and a storage medium. The codebook generation method comprises: acquiring codebook library calculation parameters and codebook configuration information of a first node, generating a codebook library on the basis of the codebook library calculation parameters and the codebook configuration information, the codebook library comprising one or more codebooks.

A codebook generation apparatus acquires codebook library calculation parameters and codebook configuration information of a first node — S201

The codebook generation apparatus generates a codebook library on the basis of the codebook library calculation parameters and the codebook configuration information — S202

FIG. 4

EP 4 734 387 A1

## Description

The present disclosure claims the priority of the Chinese patent application filed on June 29, 2023, No. 202310793275.4, the entire content of which is incorporated in the present disclosure by reference.

## TECHNICAL FIELD

The present disclosure relates to the field of wireless communication technologies, in particular to a codebook generation method and codebook generation systems, a communication apparatus, and a storage medium.

## BACKGROUND

The intelligent reflection surface (reconfigurable intelligent surface, RIS) is also referred to as a reconfigurable intelligent ultra-surface, which is an artificial electromagnetic material with programmable electromagnetic characteristics. By controlling the phase of each array element, a focusing direction of a departure beam may be regulated, to implement the control of an electromagnetic environment. The RIS may be used to intelligently adjust a wireless network environment, to implement effects such as channel capacity improving, rank increasing, blind filling, and weakness filling, which greatly improve coverage performance of the wireless communication network.

## SUMMARY

In an aspect, a codebook generation method is provided for a codebook generation apparatus. The codebook generation method includes: acquiring a codebook library calculation parameter and codebook configuration information of a first node; and generating a codebook library based on the codebook library calculation parameter and the codebook configuration information. The codebook library includes one or more codebooks.

In another aspect, a codebook generation apparatus is provided. The codebook generation apparatus includes: an acquisition module, configured to acquire a codebook library calculation parameter and codebook configuration information of a first node; and a generation module, configured to generate a codebook library based on the codebook library calculation parameter and the codebook configuration information. The codebook library includes one or more codebooks.

In yet another aspect, a codebook generation system is provided. The codebook generation system includes: a first node, a second node and a back-end management server. The back-end management server is configured to send codebook configuration information to the second node; the first node is configured to send a codebook library calculation parameter to the second node; and the second node is configured to generate a codebook library according to the codebook configuration information and the codebook library calculation parameter. The codebook library comprises one or more codebooks.

In yet another aspect, a codebook generation system is provided. The codebook generation system includes: a core network element, a first node, a second node and a back-end management server. The back-end management server is configured to send codebook configuration information to the second node; the first node is configured to send a codebook library calculation parameter to the second node; the second node is configured to send the codebook configuration information and the codebook library calculation parameter to the core network element; and the core network element is configured to generate a codebook library according to the codebook configuration information and the codebook library calculation parameter. The codebook library comprises one or more codebooks.

In yet another aspect, a codebook generation system is provided. The codebook generation system includes: a third-party server, a first node, a second node and a back-end management server. The back-end management server is configured to send codebook configuration information to the second node; the first node is configured to send a codebook library calculation parameter to the second node; the second node is configured to send the codebook configuration information and the codebook library calculation parameter to the third-party server; and the third-party server is configured to generate a codebook library according to the codebook configuration information and the codebook library calculation parameter. The codebook library comprises one or more codebooks.

In yet another aspect, a codebook generation system is provided. The codebook generation system includes: a back-end management server, a first node and a second node. The first node is configured to send a codebook library calculation parameter to the second node; the second node is configured to send the codebook library calculation parameter to the back-end management server; and the back-end management server is configured to generate a codebook library according to the codebook library calculation parameter and codebook configuration information. The codebook library comprises one or more codebooks.

In yet another aspect, a codebook generation system is provided. The codebook generation system includes: a back-end management server, a first node, a second node and a third-party server. The back-end management server is configured to send codebook configuration information to the second node; the second node is configured to send the codebook configuration information to the first node; the first node is configured to send a codebook library calculation parameter and the codebook configuration information to the third-party server; and the third-party server is configured to generate a codebook library according to the codebook configuration information and the codebook library calculation parameter. The codebook library comprises one or more codebooks.

In yet another aspect, a codebook generation system is provided. The codebook generation system includes: a back-end management server and a second node. The back-end management server is configured to send codebook configuration information and a codebook library calculation parameter to the second node; and the second node is configured to generate a codebook library according to the codebook configuration information and the codebook library calculation parameter sent from the back-end management server. The codebook library comprises one or more codebooks.

In yet another aspect, a codebook generation system is provided. The codebook generation system includes: a back-end management server, a second node and a core network element. The back-end management server is configured to send codebook configuration information and a codebook library calculation parameter to the second node; the second node is configured to send the codebook configuration information and the codebook library calculation parameter to the core network element; and the core network element is configured to generate a codebook library according to the codebook configuration information and the codebook library calculation parameter sent from the second node. The codebook library comprises one or more codebooks.

In yet another aspect, a codebook generation system is provided. The codebook generation system includes: a back-end management server, a second node and a third-party server. The back-end management server is configured to send codebook configuration information and a codebook library calculation parameter to the second node; the second node is configured to send the codebook configuration information and the codebook library calculation parameter to the third-party server; and the third-party server is configured to generate a codebook library according to the codebook configuration information and the codebook library calculation parameter sent from the second node. The codebook library comprises one or more codebooks.

In yet another aspect, a communication apparatus is provided. The communication apparatus comprises a memory and a processor. The memory is coupled with the processor; the memory is configured to store a computer program; and the processor, when executing the computer program, implements the above codebook generation method.

In yet another aspect, a computer-readable storage medium is provided, computer program instructions are stored on the computer-readable storage medium, and the computer program instructions, when executed by a processor, implement the above codebook generation method.

In yet another aspect, a computer program product is provided, the computer program product includes computer program instructions, and the computer program instructions, when executed by a processor, implement the above codebook generation method.

BRIEF DESCRIPTION OF THE DRAWINGS

To more clearly illustrate the technical solutions in the present disclosure, a brief introduction to the drawings to be used in some embodiments of the present disclosure will be provided below, and it is obvious that the drawings described below are only drawings of some embodiments of the present disclosure. For those ordinary skilled in the art, other drawings may also be obtained according to these drawings.

FIG. 1 is a schematic diagram of an architecture of a communication system according to some embodiments of the present disclosure.

FIG. 2 is a schematic diagram of a structure of a base station according to some embodiments of the present disclosure.

FIG. 3 is a schematic diagram of a structure of an RIS according to some embodiments of the present disclosure.

FIG. 4 is a flowchart of a codebook generation method according to some embodiments of the present disclosure.

FIG. 5 is a flowchart of another codebook generation method according to embodiments of the present disclosure.

FIG. 6 is a flowchart of yet another codebook generation method according to embodiments of the present disclosure.

FIG. 7 is a schematic diagram of an architecture of a codebook generation system according to some embodiments of the present disclosure.

FIG. 8 is a schematic diagram of an architecture of another codebook generation system according to embodiments of the present disclosure.

FIG. 9 is a schematic diagram of an architecture of yet another codebook generation system according to some embodiments of the present disclosure.

FIG. 10 is a schematic diagram of an architecture of yet another codebook generation system according to some embodiments of the present disclosure.

FIG. 11 is a schematic diagram of an architecture of yet another codebook generation system according to some embodiments of the present disclosure.

FIG. 12 is a schematic diagram of an architecture of yet another codebook generation system according to some embodiments of the present disclosure.

FIG. 13 is a schematic diagram of an architecture of yet another codebook generation system according to some embodiments of the present disclosure.

FIG. 14 is a schematic diagram of an architecture of yet another codebook generation system according to some embodiments of the present disclosure.

FIG. 15 is a schematic diagram of a structure of a codebook generation apparatus according to some embodiments of the present disclosure.

FIG. 16 is a schematic diagram of a structure of a communication apparatus according to some embodiments of the present disclosure.

DETAILED DESCRIPTION

The following will describe the technical solutions in the present disclosure clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that in the present disclosure, terms such as "exemplary (exemplarily)" or "for example" are used to represent examples, illustrations, or descriptions. Any embodiment or design solution described with "exemplary (exemplarily)" or "for example" should not be interpreted as being more preferred or advantageous than other embodiments or design solutions. Specifically, the use of the terms such as "exemplary (exemplarily)" or "for example", etc., is intended to present related concepts in a specific manner.

Hereinafter, the terms such as "first", "second", etc., are used only for descriptive purposes and cannot be construed as indicating or implying relative importance or implicitly indicating the number of the indicated technical features. Thus, features limited with "first", "second", etc., may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent: only A, only B, as well as A and B. Additionally, "at least one" means one or more, and "multiple/plurality of" means two or more.

A device such as an RIS with a relay and beam forwarding mechanism relies on a codebook to implement the phase control of hardware array elements. In practical uses, it is usually necessary to pre-design a codebook library (including codebooks that may be used within a target beam coverage range of the RIS) to reduce the complexity and delay of the codebook calculation when the repeater is in the practical uses.

However, how to transfer a key calculation parameter, interact with a control unit of the repeater, and transmit the codebook library, in the process of automatically generating the codebook library, is a fundamental problem for implementing the deployment and the beam regulation of the repeater such as the RIS, etc.

In view of the above technical problem, the embodiments of the present disclosure provide a codebook generation method, the idea of which is that: a codebook generation apparatus may acquire in real time, a codebook library calculation parameter and codebook configuration information of a first node; and then, automatically generate a codebook library, based on the codebook library calculation parameter and the codebook configuration information. In this way, it can be adapted to different scenarios and can automatically generate an adapted codebook library according to changes in a target coverage region, which effectively improves the convenience and practicality of the beam regulation and the deployment of the signal repeater.

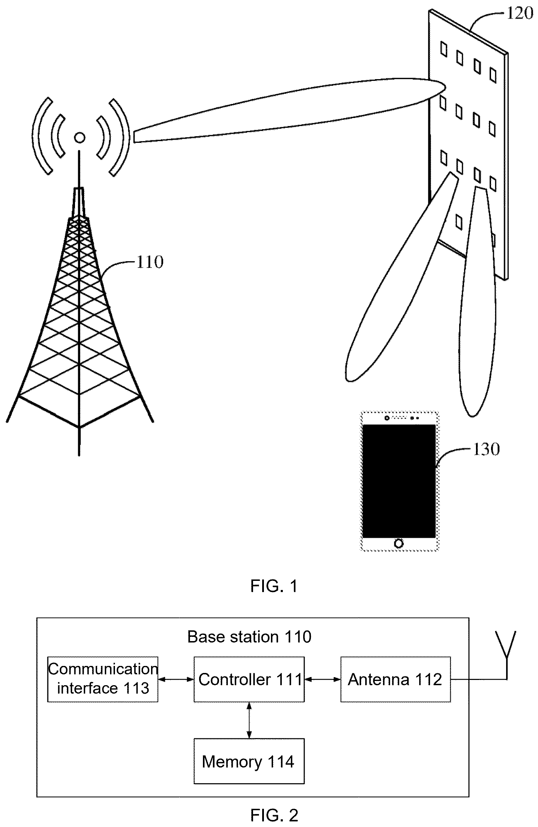

Referring to FIG. 1, it is a schematic diagram of an architecture of a communication system according to the embodiments of the present disclosure. As shown in FIG. 1, the communication system includes: a base station 110, a signal repeater 120 and a terminal device 130.

The base station 110 is configured to transmit and receive electromagnetic waves.

Exemplarily, the base station 110 may be a next-generation base station (next Generation Node B, gNB).

In some embodiments, as shown in FIG. 2, the base station 110 comprises: a controller 111 and an antenna 112. The controller 111 is configured to manage a wireless communication interface and a wireless channel. The antenna 112 is configured to transmit and receive electromagnetic waves.

Exemplarily, the antenna 112 may transmit electromagnetic waves to the signal repeater 120 according to the control of the controller 111.

In some embodiments, the base station 110 may also include a communication interface 113 for an information exchange with other devices. Exemplarily, the base station 110 may exchange information with the signal repeater 120 through the communication interface 113. The base station 110 may also exchange information with other devices such as a network server through the communication interface 113.

Exemplarily, the base station 110 may receive a codebook updating indication sent from the signal repeater 120 through the communication interface 113, and then perform codebook updating according to the codebook updating indication. The base station 110 may also receive related parameters required for codebook updating, sent from the signal repeater 120 through the communication interface 113. Exemplarily, the related parameters required for codebook updating may include a configuration parameter of RIS-Fwd 121, a deployment parameter of the RIS-Fwd 121, etc.

In some embodiments, the base station 110 may also interact with a core network element through the communication interface 113. Exemplarily, the core network element may be: an access and mobility management function (AMF), a service management function (SMF), a point coordination function (PCF), a user port function (UPF), an application function (AF), etc.

In some embodiments, the base station 110 may also exchange information with a back-end management server through the communication interface 113. The back-end management server is configured to receive service data sent from the base station 110 and process the service data. The back-end management server is also configured to exchange information with the base station 110, to implement the management and maintenance for the base station 110.

In some embodiments, the base station 110 may also include a memory 114, configured to store data. Exemplarily, the memory 114 may be configured to store a codebook.

Exemplarily, the memory 114 may be a read-only memory (ROM) or other types of static storage device that may store static information and instructions, a random access memory RAM or other types of dynamic storage device that may store information and instructions, or an electrically erasable programmable read-only memory (EEPROM), a magnetic disk storage medium or other magnetic storage devices, or any other medium that can be used to carry or store desired program codes in the form of instructions or data structures and can be accessed by a computer, which is not limited thereto.

The signal repeater 120 is configured to relay or forward electromagnetic waves transmitted from the base station 110.

Exemplarily, the signal repeater 120 may be an RIS, a network controlled repeater (NCR), or other devices with a signal forwarding or relay function.

The following takes the signal repeater 120 as an RIS as an example for illustration.

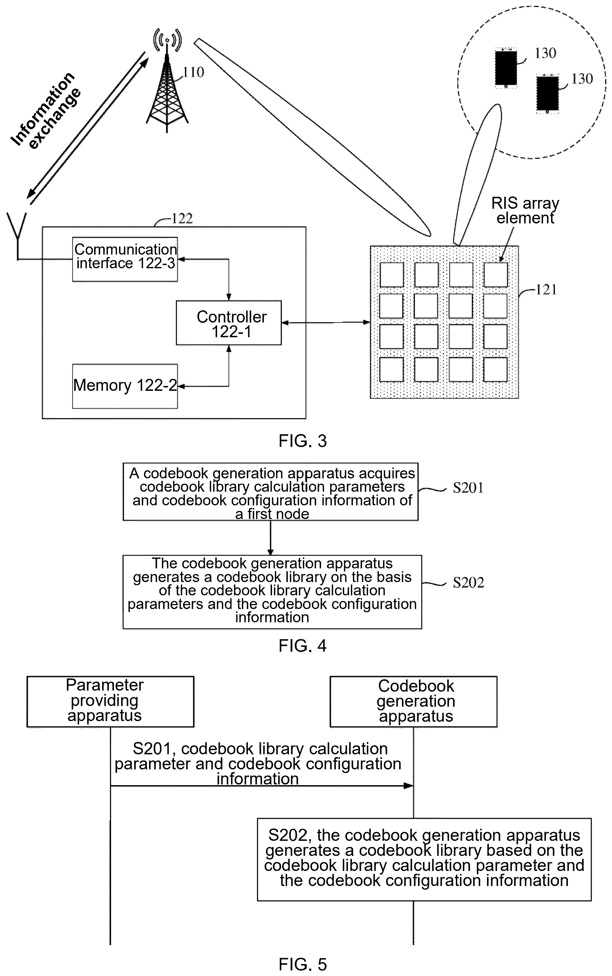

In some embodiments, as shown in FIG. 3, the signal repeater 120 includes: a signal relay module (RIS-Forwarding, RIS-Fwd) 121, and a communication and control module (RIS-Mobile-Termination, RIS-MT) 122.

The RIS-Fwd 121 includes a ultra-surface panel, the ultra-surface panel is a reflection array composed of RIS array elements, and adjusts arrival beams in different modes according to codebooks of different RIS array elements (the codebook is used to implement the control of the spectrum, phase, amplitude, and polarization value of each RIS array element), so that a departure beam may change in different amplitudes, different widths, different frequency shifts, and different departure angles, as well as change in single-beam reflection, multi-beam reflection, diffuse scattering, refraction, and transmission.

The RIS-MT 122 includes a controller 122-1, a memory 122-2 and a communication interface 122-3.

The controller 122-1 is configured to transmit a relay beam indication (i.e., a codebook) to the RIS-Fwd 121 and control an operation state of the RIS-Fwd 121.

Exemplarily, the controller 122-1 may, according to an indication of the base station 110, control the operation state of the RIS-Fwd 121, for example: on-off state (for controlling the RIS-Fwd 121 to operate or not operate, etc.); power control (for controlling the reflection beam amplitude of the RIS-Fwd 121); relay beam indication (the codebook of the RIS array element of the RIS-Fwd 121), for example, for controlling the loading of the codebook of the RIS array element.

It can be understood that a codebook represents a relative relationship between an arrival beam and a departure beam, therefore, for a reflection array, a codebook may also be referred to as a beam indication.

The memory 122-2 is configured to store the codebook.

Exemplarily, the memory 122-2 is configured to store a codebook set of the RIS. The codebook set may include some or all of codebooks in a codebook library.

The communication interface 122-3 is configured to exchange information with other devices. Exemplarily, the RIS-MT 122 may exchange information with the base station 110 through the communication interface 122-3.

Exemplarily, the RIS-MT 122 may receive control information sent from the base station 110 (for example, codebook switching information, etc.) through the communication interface 122-3, and send operation state information of the RIS, configuration information of the RIS, and a codebook set of the RIS, etc., to the base station through the communication interface 122-3.

In some embodiments, the RIS-MT 122 may also send a codebook updating indication to base station 110 through the communication interface 122-3, which is used to indicate the base station 110 to perform codebook updating. RIS-MT 122 may also send related parameters required for codebook updating to the base station 110 through the communication interface 122-3. Exemplarily, the related parameters required for codebook updating may include a configuration parameter of the RIS-Fwd 121, a deployment parameter of the RIS-Fwd 121, etc.

Exemplarily, the communication interface 122-3 may interact with other devices in modes such as Narrow Band Internet of Things (NB-loT), 5th-generation mobile communication technology (5G), wireless network transmission (wireless fidelity, WiFi), physical uplink shared channel (PUSCH), physical control channel, media access control (MAC) control element (CE), etc.

The terminal device 130 is configured to communicate according to electromagnetic waves radiated by the signal repeater 120.

In some embodiments, the terminal device 130 measures beams relayed by the codebook loaded by the signal repeater 120, to obtain signal quality information, and sends the signal quality information to the base station 110. Exemplarily, the signal quality information may include at least one of the following parameters: reference signal receiving power (RSRP), reference signal receiving quality (RSRQ), signal to interference plus noise ratio (SINR), channel quality indication (CQI), and rank indicator (RI).

Exemplarily, the terminal device 130 may be a mobile phone, a tablet computer, a desktop, a laptop, a handheld computer, a notebook computer, an ultra-mobile personal computer (UMPC), a netbook, and a cellular phone, a personal digital assistant (PDA), an augmented reality (AR)/virtual reality (VR) device, etc. The embodiments of the present disclosure do not specifically limit the specific form of the terminal device 130.

It should be noted that the system architectures and application scenarios described in the embodiments of the present disclosure are intended to more clearly illustrate the technical solutions of the embodiments of the present disclosure, and do not constitute a limitation on the technical solutions provided in the embodiments of the present disclosure. It can be known to those ordinary skilled in the art that with the evolution of the system architectures and the emergence of new service scenarios, the technical solutions provided in the embodiments of the present disclosure are also applicable to similar technical problems.

The following is a detailed introduction to a codebook generation method provided in the embodiments of the present disclosure.

The codebook generation method provided in the embodiments of the present disclosure is applied to a codebook generation apparatus. Exemplarily, the codebook generation apparatus may include any one of: a second node, a third-party server, a back-end management server, and a core network element. The second node may be the base station 110 as shown in FIG. 1.

As shown in FIG. 4, it is a codebook generation method provided according to the embodiments of the present disclosure, and the codebook generation method may include the following S201 and S202.

In S201, the codebook generation apparatus acquires a codebook library calculation parameter and codebook configuration information of a first node.

The first node may be the signal repeater 120 as shown in FIG. 1. For example, the first node may be an RIS, an NCR or an intelligent repeater.

In some embodiments, the codebook library calculation parameter includes at least one of: a configuration parameter of the first node, a deployment parameter of the first node, an identifier of the first node, and an operation mode of the first node.

Exemplarily, the configuration parameter of the first node includes at least one of: a number of horizontal array elements, a number of vertical array elements, horizontal array element spacing, vertical array element spacing, a number of quantized bits, a polarization number, a polarization direction, insertion loss, and a codebook storage capability.

The insertion loss, i.e., loss of insertion, refers to signal loss caused by an electromagnetic wave beam from the base station to the first node. The codebook storage capacity is a size of a codebook storage space, and the larger the codebook storage space, the stronger the codebook storage capacity, and the smaller the codebook storage space, the weaker the codebook storage capacity.

Exemplarily, the deployment parameter of the first node includes at least one of: a deployment height, a position coordinate, a panel orientation information, an arrival angle and a distance of a second node relative to the first node, and a departure angle and a distance of a target coverage region relative to the first node.

The position coordinate may be: a position coordinate of the first node in a global coordinate system, such as global positioning system (GPS) information of the first node; or, a position coordinate of the first node in a local coordinate system constructed based on a panel of the first node.

Exemplarily, the identifier of the first node may be a network number of the first node, i.e., an identification number of the first node in the network; or, the identifier of the first node may be a unique identity (ID) of the first node.

The operation mode of the first node includes at least one of: a transmissive mode, a reflection mode, a single-beam mode, a multi-beam mode, and an energy-saving mode.

In some embodiments, the codebook library calculation parameter may be obtained by the measurement of the first node (for example, the first node includes a measurement apparatus); or, the codebook library calculation parameter may be obtained by the measurement of a third-party measurement apparatus.

In some embodiments, the above-mentioned codebook configuration information includes: a coverage requirement for a target coverage region, correction information, a number of codebook libraries, and demand information of the codebook library.

The correction information is used to correct the codebook library calculation parameter.

The coverage requirement for the target coverage region includes beam coverage requirement information. The beam coverage requirement information may include at least one of: a coverage distance, a horizontal coverage width, a vertical coverage width, a horizontal coverage angle, a vertical coverage angle, a number of horizontal beams, a number of vertical beams, a horizontal beam form, a vertical beam form, a configuration ratio of widths and numbers of wide and narrow beams, expected RSRP, and a signal-to-noise ratio, etc.

In some embodiments, the codebook configuration information may be configured by the back-end management server; or, the back-end management server may receive the codebook library calculation parameter configured by a user.

In some embodiments, as shown in FIG. 5, the above-mentioned S201 may be implemented as that: the codebook generation apparatus acquires the codebook library calculation parameter and the codebook configuration information from a parameter providing apparatus.

As an implementation, the above-mentioned parameter providing apparatus includes: the back-end management server and the first node. The back-end management server is configured to provide the codebook configuration information, and the first node is configured to provide the codebook library calculation parameter.

As another implementation, the above-mentioned parameter providing apparatus includes: the back-end management server. The back-end management server is configured to provide the codebook library calculation parameter and the codebook configuration information.

It can be understood that in response to the back-end management server storing the codebook library calculation parameter and the codebook configuration parameter, the back-end management server may be taken as a parameter providing apparatus to provide the codebook library calculation parameter and the codebook configuration information to the codebook generation apparatus. The codebook library calculation parameter stored in the back-end management server may be measured by a third-party measurement apparatus, and sent to the back-end management server; or, the codebook library calculation parameter stored in the back-end management server may be measured by the first node at a historical moment, and sent to the back-end management server through the second node.

Exemplarily, the parameter providing apparatus may transmit the corresponding parameter through signaling such as a PUSCH, a physical control channel, or an MAC CE, etc.

In S202, the codebook generation apparatus generates a codebook library based on the codebook library calculation parameter and the codebook configuration information.

The codebook library mentioned above includes one or more codebooks.

In some embodiments, the above-mentioned S202 may be implemented as: in response to a preset condition being satisfied, generating the codebook library based on the codebook library calculation parameter and the codebook configuration information.

The above-mentioned preset condition may include at least one of: receiving first information and the first information being used to indicate to generate the codebook library; and a signal quality of a terminal device in a target coverage region, not satisfying a requirement.

As an implementation, the above-mentioned receiving the first information includes: in response to the codebook generation apparatus being the back-end management server, the core network element or the third-party server, receiving the first information sent from the second node. Exemplarily, the second node may send the first information to the codebook generation apparatus, in response to detecting that the signal quality of the terminal device within the target coverage region does not satisfy the requirement.

As another implementation, the above-mentioned receiving the first information includes: in response to the codebook library generation apparatus being the second node, receiving the first information sent from the back-end management server or the first node.

In some embodiments, in response to the codebook generation apparatus is the second node, the second node generates the codebook library based on the codebook library calculation parameter and the codebook configuration information when detecting that the signal quality of the terminal device within the target coverage region does not satisfy the requirement.

It can be understood that the second node may receive the signal quality information sent from the terminal device within the target coverage region, and then determine whether the signal quality of the terminal device within the target coverage region satisfies the requirement, based on the signal quality information. Exemplarily, in response to the signal quality information being greater than or equal to a preset signal quality threshold, it is determined that the signal quality of the terminal device within the target coverage region satisfies the requirement.

The terminal device measures the beam relayed by the codebook loaded by the first node, to obtain the signal quality information. Exemplarily, the signal quality information may include at least one of: RSRP, RSRQ, SINR, CQI, RI, etc.

The following illustrates the generation process of generating the codebook library by the codebook generation apparatus based on the codebook library calculation parameter and the codebook configuration information, in the form of an example.

Exemplarily, suppose that a number of horizontal array elements and a number of vertical array elements of a panel of the first node is M and N, a carrier frequency is f, a wavelength is $\lambda$, horizontal array element spacing is $d_h$, vertical array element array spacing is $d_v$, electromagnetic wave propagation speed is c, area of a panel of the second node is S, a spherical coordinate of an arrival signal relative to the panel of the first node is $(r_{in}, \theta i_n, \varphi_{in})$, and a range of the target coverage region (the range of the target coverage region may be reported by the back-end management server or the second node to the cobook generation apparatus, or obtained by measurement of a third-party measurement device) is $r_i \sim r_j$, $\theta_i \sim \theta_j$, $\varphi_i \sim \varphi_j$. Suppose that the number of codebook sets of the first node is limited to K, then the target coverage region may be uniformly divided, or the target coverage region may be divided into K point positions according to a designed beam angle, and a spherical coordinate set of the K point positions is expressed as $(r_0, \theta_0, \varphi_0)$, $(r_1, \theta_1, \varphi_1)$, ......, $(r_k, \theta_k, \varphi_k)$. A horizontal steering vector of the array on the panel of the first node may be expressed as the following Formula (1), and a vertical steering vector of the array on the panel of the first node may be expressed as the following Formula (2):

$$f_{\mathrm{h}} = \left[ 1, \cdots, \exp\left( -j2\pi \frac{md_{\mathrm{h}} \sin\theta \sin\varphi}{\lambda} \right), \cdots, \exp\left( -j2\pi \frac{Md_{\mathrm{h}} \sin\theta \sin\varphi}{\lambda} \right) \right] \qquad \text{Formula (1)}$$

$$f_v = \left[ 1, \cdots, \exp\left( -j2\pi \frac{nd_v \cos\theta}{\lambda} \right), \cdots, \exp\left( -j2\pi \frac{Nd_v \cos\theta}{\lambda} \right) \right] \qquad \text{Formula (2)}$$

In Formula (1), m represents a horizontal array element sequence number, and in Formula (2), n represents a vertical array element sequence number.

A gain of the array on the panel of the first node may be expressed as: $G = G_e + G_s - PL$. $G_e$ is a unit array element gain, $G_s$ is an area gain, and PL is path loss.

For the generated codebook w (the codebook w may be any codebook generated by the codebook generation apparatus), the codebook w may be generated, and whether the gain of the codebook w satisfies a requirement may be determined, according to the following formulas.

First, according to the horizontal steering vector and the vertical steering vector of the array on the panel of the first node, a direction of the beam of three-dimensional space generated by the codebook w is determined. Exemplarily, the direction R (r, $\theta$, $\varphi$) of the beam in three-dimensional space generated by the codebook w may be represented as the following Formula (3):

$$R(r, \theta, \varphi) = G \times \left| w^{\mathrm{H}} (f_h \otimes f_v) \right|^2 \qquad \text{Formula (3)}$$

Furthermore, for the K-th point position $(r_k, \theta_k, \varphi_k)$ in the target coverage region, an optimal codebook may be represented as the following Formula (4):

$$w_k = \arg \max \left( R(r_k, \theta_k, \varphi_k) \right) \qquad \text{Formula (4)}$$

It can be understood that, according to Formula (1) to Formula (4) above, the optimal codebook of each point position within the target coverage region may be generated. In Formula (3), $\bigcirc$, $\times$ represents an Kronecker product operation for matrices or vectors, and H represents a conjugate transpose operation for a matrix or a vector.

Suppose that an expected gain of the codebook of the K-th point position of the target coverage region is $G_k^{espect}$.

If the optimal codebook of the K-th point position of the target coverage region satisfies: $R(r_k, \theta_k, \varphi_k) > G_k^{espect}$, then it is determined that the generated codebook satisfies the expected gain; and if not satisfy, the parameter needs to be obtained again, to generate a codebook again.

It can be understood that, based on the codebook generation method provided in the embodiments of the present disclosure, the codebook generation apparatus may acquire in real time the codebook library calculation parameter and the codebook configuration information of the first node; and then, based on the codebook library calculation parameter and the codebook configuration information, automatically generate a codebook library. In this way, it can be adapted to different scenarios and can automatically generate an adapted codebook library according to changes in the target coverage region, which effectively improves the convenience and practicality of the beam regulation and the deployment of the signal repeater.

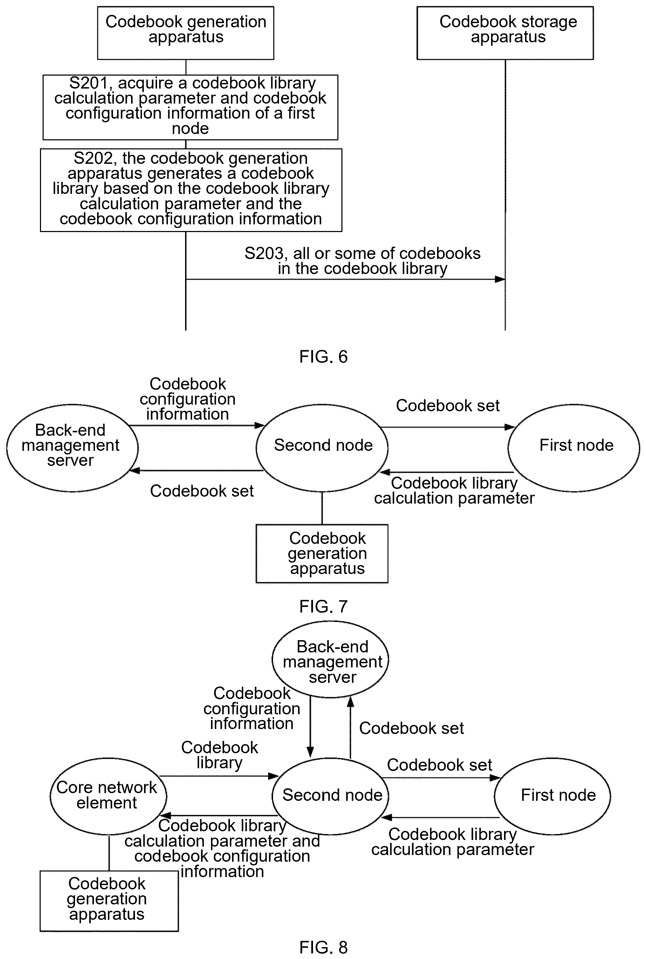

In some embodiments, as shown in FIG. 6, the above-mentioned codebook generation method also includes the following S203.

In S203, the codebook generation apparatus sends all or some of codebooks in the codebook library to a codebook storage apparatus.

The codebook storage apparatus may include at least one of: a first node, a second node, a third-party server, a back-end management server, or a core network element.

In some embodiments, the codebook generation apparatus may determine codebook(s) to be sent to the codebook storage apparatus, according to at least one of a storage capability, a deployment parameter of the codebook storage apparatus, or a coverage requirement for the target coverage region.

Exemplarily, in response to the storage capability of the codebook storage apparatus being stronger (for example, the storage space is large enough), the codebook generation apparatus may send all the codebooks in the codebook library to the codebook storage apparatus.

Exemplarily, in response to the codebook storage apparatus being the first node, the codebook generation apparatus also needs to select a codebook that matches the deployment parameter of the first node, from the codebook library, according to information such as the deployment parameter of the first node, to send to the first node.

Exemplarily, in response to the codebook storage apparatus being the first node, the codebook generation apparatus also needs to select a codebook that matches the coverage requirement for the target coverage region, from the codebook library, according to the coverage requirement for the target coverage region, to send to the first node.

It can be understood that after the codebook generation apparatus generates the codebook library, it may send codebooks to the codebook storage apparatus (it may send all or some of codebooks in the codebook library), and thus, in response to the need to use a codebook, the codebook storage apparatus may directly acquire it from its own storage space, without having to acquire from the codebook generation apparatus again, which can reduce signaling overhead, and reduce time delay.

The architecture of the codebook generation system provided in the embodiments of the present disclosure is described in detail below.

I. A codebook generation system with the second node as the codebook generation apparatus.

In some embodiments, as shown in FIG. 7, it is a codebook generation system according to the embodiments of the present disclosure. The codebook generation system comprises a first node, a second node, and a back-end management server.

The back-end management server is configured to send codebook configuration information to the second node.

The first node is configured to send the codebook library calculation parameter to the second node.

The second node is configured to generate the codebook library according to the codebook configuration information and the codebook library calculation parameter. The codebook library includes one or more codebooks.

In some embodiments, the back-end management server is also configured to send first information to the second node, and the first information is used to indicate to generate the codebook library; or, the first node is also configured to send the first information to the second node.

In some embodiments, the second node is also configured to send second information to the back-end management server, and the second information is used to indicate that the codebook library has been generated. In this way, the back-end management server can know information such as the generation situation, the arrangement mode, and the coverage range of codebooks, etc.

In some embodiments, the second node is also configured to determine a codebook set applicable to the first node from the codebook library, and send the codebook set to the first node. The codebook set may include all or some of codebooks in the codebook library.

Exemplarily, the second node may determine a codebook set applicable to the first node from the codebook library, according to information such as the storage capacity, the configuration parameter of the first node, and the coverage requirement for the target coverage region, etc.

In some embodiments, the second node is also configured to determine the codebook set applicable to the back-end management server from the codebook library and send the codebook set to the back-end management server.

Exemplarily, the second node may determine the codebook set applicable to the back-end management server from the codebook library, according to the storage capacity of the back-end management server.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 7, the codebook generation method provided in the embodiments of the present disclosure may be implemented as the following a1 to a8.

In a1, the second node receives the codebook library calculation parameter sent from the first node, and the codebook configuration information sent from the back-end management server.

Exemplarily, the first node may be an RIS and the second node may be a base station. After the controller of the RIS completes the deployment and accesses to the base station, it may send the codebook library calculation parameter to the base station.

Exemplarily, the codebook configuration information may be configured by the back-end management server; or, the back-end management server may receive the codebook configuration information configured by a user.

In some embodiments, the second node may also send the codebook library calculation parameter sent from the first node, to the back-end management server, so that the back-end management server may store the codebook library calculation parameter.

In a2, the second node generates the codebook library according to the codebook configuration information and the codebook library calculation parameter.

As an implementation, after receiving the codebook configuration information and the codebook library calculation parameter, the second node immediately generates the codebook library, according to the codebook configuration information and the codebook library calculation parameter.

As another implementation, the second node, in response to receiving the first information sent from the back-end management server, generates the codebook library according to the codebook configuration information and the codebook library calculation parameter.

As another implementation, the second node, in response to receiving the first information sent from the first node, generates the codebook library according to the codebook configuration information and the codebook library calculation parameter. Exemplarily, the first node may, in response to initially accessing to the second node, send the first information to the second node; or, the first node may send the first information to the second node, in response to the state of the first node changing.

As another implementation, the second node, in response to detecting that the signal quality of the terminal device within the target coverage region does not satisfy the requirement, generates the codebook library based on the codebook library calculation parameter and the codebook configuration information.

In a3, the second node sends the second information to the back-end management server.

In a4, the second node determines a codebook set applicable to the first node from the codebook library, and sends the codebook set to the first node.

In a5, the second node determines a codebook set applicable to the back-end management server from the codebook library, and sends the codebook set to the back-end management server.

In a6, the second node receives a measurement instruction sent from the back-end management server.

In a7, the second node, in response to the measurement instruction, measures the signal quality of the terminal within the target coverage region, and determines whether the generated codebook library satisfies the expected coverage requirement and gain requirement according to the signal quality of the terminal within the target coverage region.

In a8, in response to determining that the generated codebook library does not satisfy the preset coverage requirement and gain requirement according to the signal quality of the terminal within the target coverage region, the second node acquires the codebook library calculation parameter and codebook library calculation parameter again, and generates a codebook library again.


II. A codebook generation system with the core network element as the codebook generation apparatus.

In some embodiments, as shown in FIG. 8, it is a codebook generation system according to the embodiments of the present disclosure. The codebook generation system includes the core network element, the first node, the second node, and the back-end management server.

The back-end management server is configured to send codebook configuration information to the second node.

The first node is configured to send a codebook library calculation parameter to the second node.

The second node is configured to send the codebook configuration information and the codebook library calculation parameter to the core network element.

The core network element is configured to generate a codebook library according to the codebook configuration information and the codebook library calculation parameter. The codebook library comprises one or more codebooks.

In some embodiments, the core network element is also configured to send the codebook library to the second node. The second node is also configured to determine a codebook set applicable to the first node from the codebook library, and send the codebook set to the first node.

In some embodiments, the second node is also configured to send first information to the core network element, and the first information is used to indicate to generate the codebook library.

Exemplarily, the second node may send the first information to the core network element, in response to receiving a generation instruction sent from the back-end management server. The generate instruction is used to indicate the second node to send the first information to the core network element.

Exemplarily, the second node may send the first information to the core network element, in response to the first node initially accessing to the second node.

Exemplarily, the second node may send the first information to the core network element, in response to determining that the state of the first node changes.

Exemplarily, the second node may send the first information to the core network element, in response to detecting that the signal quality of the terminal device within the target coverage region does not satisfy the requirement.

In some embodiments, the core network element is also configured to send the generated codebook library to the second node (or, send some of codebook sets in the codebook library). Furthermore, the second node is also configured to determine a codebook set applicable to the first node from the codebook library, and send the codebook set to the first node; and determine a codebook set applicable to the back-end management server from the codebook library, and send the codebook set to the back-end management server.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 8, the codebook generation method provided in the embodiments of the present disclosure may be implemented as the following b1 to b9.

In b1, the second node acquires the codebook library calculation parameter sent from the first node, and the codebook configuration information sent from the back-end management server.

In b2, the second node sends the codebook library calculation parameter and the codebook configuration information to the core network element.

In b3, the core network element generates a codebook library according to the codebook configuration information and the codebook library calculation parameter.

As an implementation, after receiving the codebook configuration information and the codebook library calculation parameter, the core network element immediately generates the codebook library, according to the codebook configuration information and the codebook library calculation parameter.

As another implementation, in response to receiving the first information sent from the second node, the core network element generates the codebook library according to the codebook configuration information and the codebook library calculation parameter.

In b4, the core network element sends the codebook library to the second node.

In b5, the second node determines a codebook set applicable to the first node from the codebook library, and sends the codebook set to the first node.

In b6, the second node determines a codebook set applicable to the back-end management server from the codebook library, and sends the codebook set to the back-end management server.

In b7, the second node receives a measurement instruction sent from the back-end management server.

In b8, the second node, in response to the measurement instruction, measures the signal quality of the terminal within the target coverage region, and determines whether the generated codebook library satisfies the expected coverage requirement and gain requirement according to the signal quality of the terminal within the target coverage region.

In b9, in response to determining that the generated codebook library does not satisfy the preset coverage requirement and gain requirement according to the signal quality of the terminal within the target coverage region, the second node acquires the codebook library calculation parameter and codebook library calculation parameter again to send to the core network element, and the core network element generates a codebook library again.

III. A codebook generation system with the back-end management server as the codebook generation apparatus.

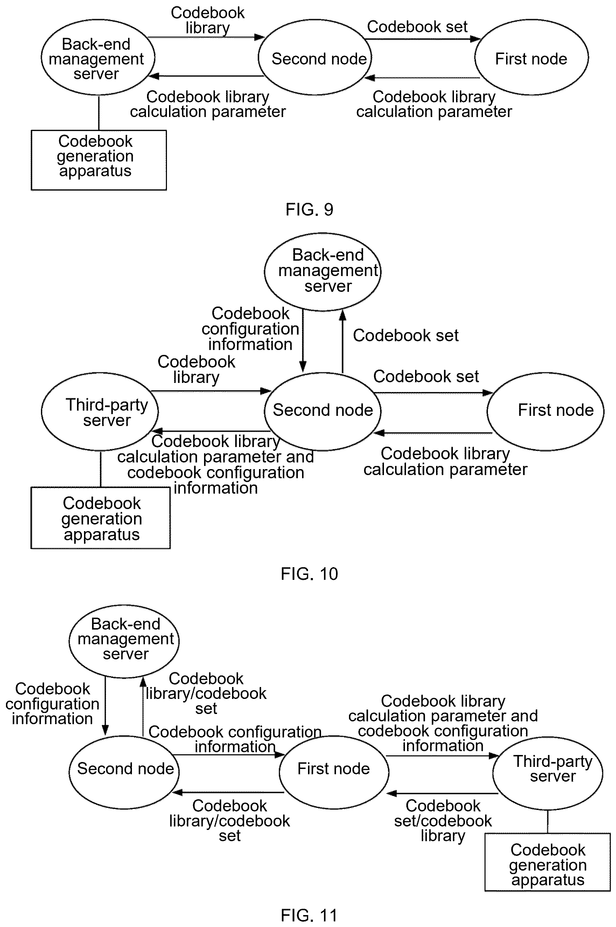

In some embodiments, as shown in FIG. 9, it is a codebook generation system according to the embodiments of the present disclosure. The codebook generation system includes a back-end management server, a first node, and a second node.

The first node is configured to send a codebook library calculation parameter to the second node.

The second node is configured to send the codebook library calculation parameter to the back-end management server.

The back-end management server is configured to generate a codebook library according to the codebook library calculation parameter and codebook configuration information. The codebook library comprises one or more codebooks.

In some embodiments, the second node is also configured to send first information to the back-end management server, and the first information is used to indicate to generate a codebook library.

Exemplarily, the second node may send the first information to the back-end management server, in response to the first node initially accessing to the second node.

Exemplarily, the second node may send the first information to the back-end management server in response to determining that the state of the first node changes.

For example, the second node may send the first information to the back-end management server, in response to detecting that the signal quality of the terminal device within the target coverage region does not satisfy the requirement.

In some embodiments, the back-end management server is also configured to send the generated codebook library to the second node (or, send some of codebook sets in the codebook library). Furthermore, the second node is also configured to determine a codebook set applicable to the first node from the codebook library, and send the codebook set to the first node.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 9, the codebook generation method provided in the embodiments of the present disclosure may be implemented as the following c1 to c8.

In c1, the second node acquires the codebook library calculation parameter sent from the first node.

In c2, the second node sends the codebook library calculation parameter to the back-end management server.

In c3, the back-end management server generates the codebook library according to the codebook configuration information and the codebook library calculation parameter.

As an implementation, after receiving the codebook configuration information and the codebook library calculation parameter, the back-end management server immediately generates the codebook library, according to the codebook configuration information and the codebook library calculation parameter. It can be understood that the back-end management server may actively trigger to generate the codebook library.

As another implementation, in response to receiving the first information sent from the second node, the back-end management server generates the codebook library according to the codebook configuration information and the codebook library calculation parameter.

In c4, the back-end management server sends the codebook library to the second node.

In c5, the second node determines a codebook set applicable to the first node from the codebook library, and sends the codebook set to the first node.

In c6, the second node receives a measurement instruction sent from the back-end management server.

In c7, the second node, in response to the measurement instruction, measures the signal quality of the terminal within the target coverage region, and determines whether the generated codebook library satisfies the expected coverage requirement and gain requirement according to the signal quality of the terminal within the target coverage region.

In c8, in response to determining that the generated codebook library does not satisfy the preset coverage requirement and gain requirement according to the signal quality of the terminal within the target coverage region, the second node acquires the codebook library calculation parameter again to send to the back-end management server, and the back-end management server generates a codebook library again.

IV. A codebook generation system with a third-party server as the codebook generation apparatus.

In some embodiments, as shown in FIG. 10, it is a codebook generation system according to the embodiments of the present disclosure. The codebook generation system includes the third-party server, the first node, the second node, and the back-end management server.

The back-end management server is configured to send codebook configuration information to the second node.

The first node is configured to send a codebook library calculation parameter to the second node.

The second node is configured to send the codebook configuration information and the codebook library calculation parameter to the third-party server.

The third-party server is configured to generate a codebook library according to the codebook configuration information and the codebook library calculation parameter. The codebook library comprises one or more codebooks.

In some embodiments, the third-party server is also configured to send the codebook library to the second node. The second node is also configured to determine a codebook set applicable to the first node from the codebook library, and send the codebook set to the first node; and determine a codebook set applicable to the back-end management server from the codebook library, and send the codebook set to the back-end management server.

In some embodiments, the second node is also configured to send the first information to the third-party server, and the first information is used to indicate to generate the codebook library.

Exemplarily, the second node may send the first information to the third-party server, in response to receiving a generation instruction sent from the back-end management server. The generate instruction is used to indicate the second node to send the first information to the third-party server.

Exemplarily, the second node may send the first information to the third-party server, in response to the first node initially accessing to the second node.

Exemplarily, the second node may send the first information to the third-party server, in response to determining that the state of the first node changes.

Exemplarily, the second node may send the first information to the third-party server, in response to detecting that the signal quality of the terminal device within the target coverage region does not satisfy the requirement.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 10, the codebook generation method provided in the embodiments of the present disclosure may be implemented as the following d1 to d8.

In d1, the second node acquires the codebook library calculation parameter sent from the first node, and the codebook configuration parameter sent from the back-end management server.

In d2, the second node sends the codebook library calculation parameter and the codebook configuration parameter to the third-party server.

In d3, the third-party server generates the codebook library according to the codebook configuration information and the codebook library calculation parameter.

As an implementation, after receiving the codebook configuration information and the codebook library calculation parameter, the third-party server immediately generates the codebook library, according to the codebook configuration information and the codebook library calculation parameter.

As another implementation, in response to receiving the first information sent from the second node, the third-party server generates the codebook library according to the codebook configuration information and the codebook library calculation parameter.

In d4, the third-party server sends the codebook library to the second node.

In d5, the second node determines a codebook set applicable to the first node from the codebook library, and sends the codebook set to the first node; and determines a codebook set applicable to the back-end management server from the codebook library, and sends the codebook set to the back-end management server.

In d6, the second node receives a measurement instruction sent from the back-end management server.

In d7, the second node, in response to the measurement instruction, measures the signal quality of the terminal within the target coverage region, and determines whether the generated codebook library satisfies the expected coverage requirement and gain requirement according to the signal quality of the terminal within the target coverage region.

In d8, in response to determining that the generated codebook library does not satisfy the preset coverage requirement and gain requirement according to the signal quality of the terminal within the target coverage region, the second node acquires the codebook library calculation parameter and the codebook configuration parameter again to send to the third-party server, and the third-party server generates a codebook library again.

V. A codebook generation system with a third-party server as the codebook generation apparatus.

In some embodiments, as shown in FIG. 11, it is a codebook generation system according to the embodiments of the present disclosure. The codebook generation system includes: a back-end management server, a first node, a second node, and a third-party server.

The back-end management server is configured to send codebook configuration information to the second node.

The second node is configured to send the codebook configuration information to the first node.

The first node is configured to send a codebook library calculation parameter and the codebook configuration information to the third-party server.

The third-party server is configured to generate a codebook library according to the codebook configuration information and the codebook library calculation parameter. The codebook library comprises one or more codebooks.

In some other embodiments, the above-mentioned third-party server may also acquire the codebook library calculation parameter through a mode such as human input, sensor measurement, and image recognition according to an image captured by a camera, so that there is no need for the first node to send the codebook library calculation parameter to the third-party server, thereby reducing signaling costs.

In some embodiments, the third-party server is also configured to determine a codebook set applicable to the first node from the codebook library, and send the codebook set to the first node.

In some embodiments, the third-party server is also configured to send the codebook library (or codebook set) to the first node, so that the first node sends the codebook library to the second node. Furthermore, the second node is also configured to send the codebook library to the back-end management server, so that the back-end management server knows information such as the generation situation, arrangement mode, and coverage range of codebooks, etc.

In some embodiments, the second node is also configured to send first information to the first node, so that the first node forwards the first information to the third-party server. The first information is used to indicate to generate the codebook library.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 11, the codebook generation method provided in the embodiments of the present disclosure may be implemented as the following e1 to e9.

In e1, the second node acquires a codebook configuration parameter sent from the back-end management server.

In e2, the second node sends the codebook configuration parameter to the first node.

In e3, the first node sends a codebook library calculation parameter and the codebook configuration parameter, to the third-party server.

In e4, the third-party server generates the codebook library according to the codebook configuration information and the codebook library calculation parameter.

As an implementation, after receiving the codebook configuration information and the codebook library calculation parameter, the third-party server immediately generates the codebook library, according to the codebook configuration information and the codebook library calculation parameter.

As another implementation, in response to receiving the first information sent from the first node, the third-party server generates the codebook library according to the codebook configuration information and the codebook library calculation parameter.

In e5, the third-party server determines a codebook set applicable to the first node from the codebook library, and sends the codebook set to the first node.

In e6, the third-party server sends the codebook library to the first node, so that the first node sends the codebook library to the second node, and the second node sends the codebook library to the back-end management server.

In e7, the second node receives a measurement instruction sent from the back-end management server.

In e8, the second node, in response to the measurement instruction, measures the signal quality of the terminal within the target coverage region, and determines whether the generated codebook library satisfies the expected coverage requirement and gain requirement according to the signal quality of the terminal within the target coverage region.

In e9, in response to determining that the generated codebook library does not satisfy the preset coverage requirement and gain requirement according to the signal quality of the terminal within the target coverage region, the second node acquires a codebook configuration parameter again to send to the first node. Furthermore, the first node measures a codebook library generation parameter again, and sends the codebook library generation parameter and the codebook configuration parameter to the third-party server, and the third-party server generates a codebook library again.

VI. A codebook generation system with a second node as the codebook generation apparatus, and a back-end management server directly configuring all parameters.

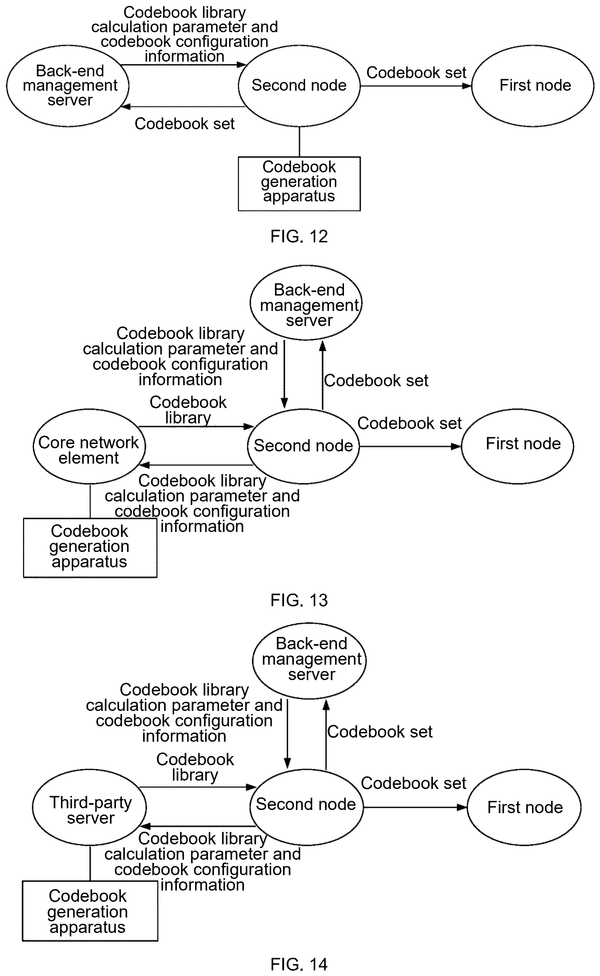

In some embodiments, as shown in FIG. 12, it is a codebook generation system according to the embodiments of the present disclosure. The codebook generation system comprises: a back-end management server and a second node.

The back-end management server is configured to send codebook configuration information and a codebook library calculation parameter to the second node.

The second node is configured to generate a codebook library according to the codebook configuration information and the codebook library calculation parameter sent from the back-end management server. The codebook library comprises one or more codebooks.

In some embodiments, the back-end management server is also configured to send first information to the second node, and the first information is used to indicate to generate the codebook library; or, a first node is also configured to send the first information to the second node.

In some embodiments, the second node is also configured to send second information to the back-end management server, and the second information is used to indicate that the codebook library has been generated. In this way, the back-end management server can know information such as the generation situation, arrangement mode, and coverage range of codebooks, etc.

In some embodiments, the second node is also configured to determine a codebook set applicable to the first node from the codebook library, and send the codebook set to the first node. The codebook set may include all or some of codebooks in the codebook library.

In some embodiments, the second node is also configured to determine a codebook set applicable to the back-end management server from the codebook library, and send the codebook set to the back-end management server.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 12, the codebook generation method provided in the embodiments of the present disclosure may be implemented as the following f1 to f8.

In f1, the second node receives a codebook library calculation parameter and codebook configuration information sent from the back-end management server.

In f2, the second node generates a codebook library according to the codebook configuration information and the codebook library calculation parameter.

In f3, the second node sends second information to the back-end management server.

In f4, the second node determines a codebook set applicable to the first node from the codebook library, and sends the codebook set to the first node.

In f5, the second node determines a codebook set applicable to the back-end management server from the codebook library, and sends the codebook set to the back-end management server.

In f6, the second node receives a measurement instruction sent from the back-end management server.

In f7, the second node, in response to the measurement instruction, measures the signal quality of the terminal within the target coverage region, and determines whether the generated codebook library satisfies the expected coverage requirement and gain requirement according to the signal quality of the terminal within the target coverage region.

In f8, in response to determining that the generated codebook library does not satisfy the preset coverage requirement and gain requirement according to the signal quality of the terminal within the target coverage region, the second node acquires the codebook library calculation parameter and the codebook library calculation parameter again and generates a codebook library again.

VII. A codebook generation system with a core network element as the codebook generation apparatus, and a back-end management server directly configuring all parameters.

In some embodiments, as shown in FIG. 13, it is a codebook generation system according to the embodiments of the present disclosure. The codebook generation system includes a back-end management server, a second node, and a core network element.

The back-end management server is configured to send codebook configuration information and a codebook library calculation parameter to the second node.

The second node is configured to send the codebook configuration information and the codebook library calculation parameter to the core network element.

The core network element is configured to generate a codebook library according to the codebook configuration information and the codebook library calculation parameter sent from the second node. The codebook library comprises one or more codebooks.

In some embodiments, the core network element is also configured to send the codebook library to the second node. The second node is also configured to determine a codebook set applicable to the first node from the codebook library, and send the codebook set to the first node; and determine a codebook set applicable to the back-end management server from the codebook library, and send the codebook set to the back-end management server.

In some embodiments, after receiving the codebook library, the second node is also configured to send second information to the back-end management server, and the second information is used to represent that the codebook library has been generated. In this way, the back-end management server can know information such as the generation situation, arrangement mode, and coverage range of codebooks, etc.

In some embodiments, the second node is also configured to send first information to the core network element, and the first information is used to indicate to generate the codebook library.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 13, the codebook generation method provided in the embodiments of the present disclosure may be implemented as the following g1 to g9.

In g1, the second node receives a codebook library calculation parameter and codebook configuration information sent from the back-end management server.

In g2, the second node sends the codebook library calculation parameter and the codebook configuration information to the core network element.

In g3, the core network element generates a codebook library according to the codebook configuration information and the codebook library calculation parameter.

In g4, the core network element sends the codebook library to the second node.

In g5, the second node determines a codebook set applicable to the first node from the codebook library, and sends the codebook set to the first node.

In g6, the second node determines a codebook set applicable to the back-end management server from the codebook library, and sends the codebook set to the back-end management server.

In g7, the second node receives a measurement instruction sent from the back-end management server.

In g8, the second node, in response to the measurement instruction, measures the signal quality of the terminal within the target coverage region, and determines whether the generated codebook library satisfies the expected coverage requirement and gain requirement according to the signal quality of the terminal within the target coverage region.

In g9, in response to determining that the generated codebook library does not satisfy the preset coverage requirement and gain requirement according to the signal quality of the terminal within the target coverage region, the second node acquires the codebook library calculation parameter and codebook library calculation parameter again to send to the core network element, and the core network element generates a codebook library again.

VIII. A codebook generation system with a third-party server as the codebook generation apparatus, and a back-end management server directly configuring all parameters.

In some embodiments, as shown in FIG. 14, it is a codebook generation system according to the embodiments of the present disclosure. The codebook generation system includes: a back-end management server, a second node, and a third-party server.

The back-end management server is configured to send codebook configuration information and a codebook library calculation parameter to the second node.

The second node is configured to send the codebook configuration information and the codebook library calculation parameter to the third-party server.

The third-party server is configured to generate a codebook library according to the codebook configuration information and the codebook library calculation parameter sent from the second node. The codebook library comprises one or more codebooks.

In some embodiments, the third-party server is also configured to send the codebook library to the second node. The second node is also configured to determine a codebook set applicable to a first node from the codebook library, and send the codebook set to the first node; and determine a codebook set applicable to the back-end management server from the codebook library, and send the codebook set to the back-end management server.

In some embodiments, after receiving the codebook library, the second node is also configured to send second information to the back-end management server, and the second information is used to indicate that the codebook library has been generated. In this way, the back-end management server can know information such as the generation situation, arrangement method, and coverage range of codebooks, etc.

In some embodiments, the back-end management server is also configured to send a measurement instruction to the second node. The measurement instruction is used to trigger the second node to measure signal quality of a terminal within the target coverage region. In this way, the second node may determine whether the generated codebook library satisfies the expected coverage requirement and gain requirement, according to the signal quality of the terminal within the target coverage region.

In response to determining that the generated codebook library does not satisfy the preset coverage requirement and gain requirement according to the signal quality of the terminal within the target coverage region, parameter correction is performed, to generate a codebook library again.

In some embodiments, based on the codebook generation system as shown in FIG. 14, the codebook generation method provided in the embodiments of the present disclosure may be implemented as the following h1 to h9.

In h1, the second node receives a codebook library calculation parameter and codebook configuration information sent from the back-end management server.

In h2, the second node sends the codebook library calculation parameter and the codebook configuration information, to the third-party server.

In h3, the third-party server generates a codebook library according to the codebook configuration information and the codebook library calculation parameter.

In h4, the third-party server sends the codebook library to the second node.

In h5, the second node determines a codebook set applicable to the first node from the codebook library, and sends the codebook set to the first node.

In h6, the second node determines a codebook set applicable to the back-end management server from the codebook library, and sends the codebook set to the back-end management server.

In h7, the second node receives a measurement instruction sent from the back-end management server.

In h8, the second node, in response to the measurement instruction, measures the signal quality of the terminal within the target coverage region, and determines whether the generated codebook library satisfies the expected coverage requirement and gain requirement according to the signal quality of the terminal within the target coverage region.

In h9, in response to determining that the generated codebook library does not satisfy the preset coverage requirement and gain requirement according to the signal quality of the terminal within the target coverage region, the second node acquires the codebook library calculation parameter and the codebook library calculation parameter to send to the third-party server, and the third-party server generates a codebook library again.

It should be noted that in the codebook generation systems shown in FIG. 12, FIG. 13 and FIG. 14, all the parameters are directly configured by the back-end management server, that is, the back-end management server may store the codebook library calculation parameter, and the back-end management server may update the codebook library calculation parameter according to a preset time period.

Exemplarily, the second node may send a measurement instruction for the codebook library calculation parameter to the first node according to the preset time period. The measurement instruction for the codebook library calculation parameter is used to trigger the first node to measure the codebook library calculation parameter and loop codebooks and other behaviors. After the measurement is completed by the first node, the measured codebook library calculation parameter may be fed back to the second node. Furthermore, the second node may send the codebook library calculation parameter to the back-end management server, so that the back-end management server may store the codebook library calculation parameter.

Exemplarily, the second node may independently send a measurement instruction for the codebook library calculation parameter to the first node; or, the second node may, under the control of the back-end management server, send a measurement instruction for the codebook library calculation parameter to the first node.

It can be understood that, for the absence of the architecture and interface of the codebook generation system in related art, the embodiments of the present disclosure provide multiple codebook generation systems from the perspective of carrying by different calculation entities, and for each codebook generation system, provide the related interface and codebook generation process, thereby filling the absence in the related art and enabling to implement the automatic generation of the codebook library, so that the signal repeater such as an RIS is more intelligent and easier to use.

The above mainly introduces the solutions of the embodiments of the present disclosure from the perspective of methods. It can be understood that the codebook generation apparatus, in order to implement the above-mentioned functions, contains at least one of the corresponding hardware structure and software module for performing each function. Those skilled in the art should easily realize that, in conjunction with the units and algorithmic steps of each example described in the embodiments disclosed herein, the embodiments of the present disclosure can be implemented in the form of hardware or a combination of hardware and computer software. Whether a certain function is performed by hardware or computer software driving hardware, depends on the specific applications and design constraints of the technical solutions. Professional technicians may use different methods for each specific application to implement the described function, but this implementation should not be regarded as beyond the scope of the embodiments of the present disclosure.

It can be understood that in order to implement the above functions, a codebook generation apparatus includes the corresponding hardware structures and/or software modules for performing each function. Those skilled in the art should easily realize that, in conjunction with the algorithmic steps of each example described in the embodiments of the present disclosure, the present disclosure can be implemented in the form of hardware or a combination of hardware and computer software. Whether a certain function is performed by hardware or computer software driving hardware, depends on the specific applications and design constraints of the technical solutions. Professional technicians may use different methods for each specific application to implement the described functions, but such an implementation should not be regarded as beyond the scope of the present disclosure.

In the embodiments of the present disclosure, the codebook generation apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

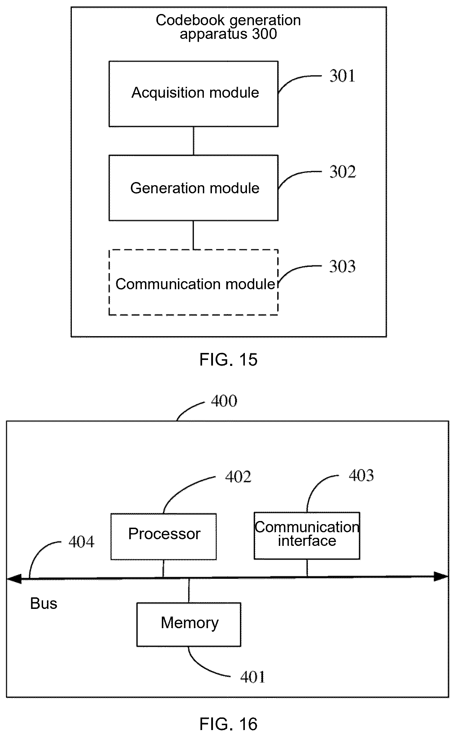

FIG. 15 is a schematic diagram of a structure of a codebook generation apparatus according to the embodiments of the present disclosure. The codebook generation apparatus may perform the codebook generation method provided in the above method embodiments. As shown in FIG. 15, the codebook generation apparatus 300 includes: an acquisition module 301 and a generation module 302. In some other embodiments, the codebook generation apparatus 300 also includes: a communication module 303.

The acquisition module 301 is configured to acquire a codebook library calculation parameter and codebook configuration information of a first node.

The generation module 302 is configured to a codebook library based on the codebook library calculation parameter and the codebook configuration information. The codebook library comprises one or more codebooks.

In some embodiments, the codebook library calculation parameter comprises at least one of: a configuration parameter of the first node, a deployment parameter of the first node, an identifier of the first node, and an operation mode of the first node.

In some embodiments, the configuration parameter of the first node comprises at least one of: a number of horizontal array elements, a number of vertical array elements, horizontal array element spacing, vertical array element spacing, a number of quantized bits, a polarization number, a polarization direction, insertion loss, and a codebook storage capability.

In some embodiments, the deployment parameter of the first node comprises at least one of: a deployment height, a position coordinate, a panel orientation information, an arrival angle and a distance of a second node relative to the first node, and a departure angle and a distance of a target coverage region relative to the first node.

In some embodiments, the operation mode of the first node comprises at least one of: a transmissive mode, a reflection mode, a single-beam mode, a multi-beam mode, and an energy-saving mode.

In some embodiments, the codebook configuration information comprises: a coverage requirement for a target coverage region, correction information, a number of codebook libraries, and demand information of the codebook library. The correction information is used to correct the codebook library calculation parameter.

In some embodiments, the codebook generation apparatus comprises any one of: a second node, a third-party server, a back-end management server, and a core network element.

In some embodiments, the acquisition module 301 is configured, for example, to acquire the codebook library calculation parameter and the codebook configuration information, from a parameter providing apparatus.

In some embodiments, the parameter providing apparatus comprises the back-end management server and the first node, the back-end management server is used to provide the codebook configuration information, and the first node is used to provide the codebook library calculation parameter. Or, the parameter providing apparatus comprises the back-end management server, and the back-end management server is used to provide the codebook library calculation parameter and the codebook configuration information.

In some embodiments, the generation module 302 is configured, for example, to generate the codebook library based on the codebook library calculation parameter and the codebook configuration information, in response to a preset condition being satisfied; the preset condition includes at least one of: receiving first information and the first information being used to indicate to generate the codebook library; and a signal quality of a terminal in a target coverage region, not satisfying a requirement.

In some embodiments, the communication module 303 is configured to receive the first information sent from the second node, in response to the codebook generation apparatus being the back-end management server, the core network element or the third-party server; or, receive the first information sent from the back-end management server or the first node, in response to the codebook library generation apparatus being the second node.

In some embodiments, the communication module 303 is also configured to send all or some of codebooks in the codebook library to a codebook storage apparatus.

In some embodiments, the codebook storage apparatus comprises at least one of: the first node, a second node, a third-party server, a back-end management server, and a core network element.

In some embodiments, the first node is a reconfigurable intelligent ultra-surface, a network controlled repeater, or an intelligent repeater.

In some embodiments, the codebook is used to indicate a correspondence between an arrival beam and a departure beam.

In a case of implementing the functions of the integrated modules mentioned above in the form of hardware, the embodiments of the present disclosure provide another structure of a communication apparatus involved in the above embodiments. As shown in FIG. 16, the communication apparatus 400 includes: a processor 402 and a bus 404. In some embodiments, the communication apparatus 400 may also include a memory 401. In some embodiments, the communication apparatus 400 may also include a communication interface 403.

The processor 402 may implement or perform various exemplary logical blocks, modules and circuits described in conjunction with the embodiments of the present disclosure. The processor 402 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 402 may also be a combination that implements computing functions, for example, including a combination of one or more microprocessors, a combination of a digital signal processor (DSP) and a microprocessor, or the like.

The communication interface 403 is configured to connect with other devices via a communication network. The communication network may be an Ethernet, a radio access network, a wireless local area network (WLAN), or the like.

The memory 401 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 401 may exist independently of the processor 402, and the memory 401 may be connected to the processor 402 via the bus 404 and used for storing instructions or program codes. The processor 402, when calling and executing the instructions or program codes stored in the memory 401, is capable of implementing the codebook generation method provided in the embodiments of the present disclosure.

In another implementation, the memory 401 may also be integrated with the processor 402.

The bus 404 may be an extended industry standard architecture (EISA) bus or the like. Buses 404 may be divided into address buses, data buses, control buses, and the like. For the convenience of representation, only one thick line is used in FIG. 16 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the codebook generation method as described in any of the above-mentioned embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the codebook generation method as described in any embodiment of the above-mentioned embodiments.

In the codebook generation solutions provided in the embodiments of the present disclosure, the codebook generation apparatus may acquire in real time the codebook library calculation parameter and the codebook configuration information of the first node; and then, based on the codebook library calculation parameter and the codebook configuration information, automatically generate the codebook library. In this way, it can be adapted to different scenarios and can automatically generate the adapted codebook library according to changes in the target coverage region, which effectively improves the convenience and practicality of the beam regulation and the deployment of the signal repeater. The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A codebook generation method, **characterized in that** the method is applied to a codebook generation apparatus, and comprises:

   acquiring a codebook library calculation parameter and codebook configuration information of a first node; and
   generating a codebook library based on the codebook library calculation parameter and the codebook configuration information, the codebook library comprising one or more codebooks.

2. The method according to claim 1, wherein the codebook library calculation parameter comprises at least one of: a configuration parameter of the first node, a deployment parameter of the first node, an identifier of the first node, and an operation mode of the first node.

3. The method according to claim 2, wherein the configuration parameter of the first node comprises at least one of: a number of horizontal array elements, a number of vertical array elements, horizontal array element spacing, vertical array element spacing, a number of quantized bits, a polarization number, a polarization direction, insertion loss, and a codebook storage capability.

4. The method according to claim 2, wherein the deployment parameter of the first node comprises at least one of: a deployment height, a position coordinate, a panel orientation information, an arrival angle and a distance of a second node relative to the first node, and a departure angle and a distance of a target coverage region relative to the first node.

5. The method according to claim 2, wherein the operation mode of the first node comprises at least one of: a transmissive mode, a reflection mode, a single-beam mode, a multi-beam mode, and an energy-saving mode.

6. The method according to claim 1, wherein the codebook configuration information comprises: a coverage requirement for a target coverage region, correction information, a number of codebook libraries, and demand information of the codebook library; wherein the correction information is used to correct the codebook library calculation parameter.

7. The method according to claim 1, wherein the codebook generation apparatus comprises any one of: a second node, a third-party server, a back-end management server, and a core network element.

8. The method according to claim 7, wherein acquiring the codebook library calculation parameter and the codebook configuration information of the first node, comprises:
   acquiring the codebook library calculation parameter and the codebook configuration information, from a parameter providing apparatus.

9. The method according to claim 8, wherein the parameter providing apparatus comprises the back-end management server and the first node, the back-end management server is used to provide the codebook configuration information, and the first node is used to provide the codebook library calculation parameter; or

the parameter providing apparatus comprises the back-end management server, and the back-end management server is used to provide the codebook library calculation parameter and the codebook configuration information.

10. The method according to claim 7, wherein generating the codebook library based on the codebook library calculation parameter and the codebook configuration information, comprises:

in response to a preset condition being satisfied, generating the codebook library based on the codebook library calculation parameter and the codebook configuration information;
wherein the preset condition comprises at least one of:

receiving first information and the first information being used to indicate to generate the codebook library; and
a signal quality of a terminal in a target coverage region, not satisfying a requirement.

11. The method according to claim 10, wherein receiving the first information, comprises:

in response to the codebook generation apparatus being the back-end management server, the core network element or the third-party server, receiving the first information sent from the second node; or
in response to the codebook library generation apparatus being the second node, receiving the first information sent from the back-end management server or the first node.

12. The method according to claim 1, further comprising:
sending all or some of codebooks in the codebook library to a codebook storage apparatus.

13. The method according to claim 12, wherein the codebook storage apparatus comprises at least one of: the first node, a second node, a third-party server, a back-end management server, and a core network element.

14. The method according to claim 1, wherein the first node is a reconfigurable intelligent ultra-surface, a network controlled repeater, or an intelligent repeater.

15. The method according to claim 1, wherein the codebook is used to indicate a correspondence between an arrival beam and a departure beam.

16. A communication apparatus, **characterized by** comprising: a memory and a processor; wherein the memory is coupled with the processor; the memory is configured to store instructions executable by the processor; the processor, when executing the instructions, performs the method according to any one of claims 1 to 15.

17. A computer-readable storage medium, **characterized in that** computer instructions are stored on the computer-readable storage medium, and the computer instructions, when executed on an electronic device, cause the electronic device to perform the method according to any one of claims 1 to 15.

18. A codebook generation system, **characterized in that** the codebook generation system comprises a first node, a second node and a back-end management server;

the back-end management server is configured to send codebook configuration information to the second node;
the first node is configured to send a codebook library calculation parameter to the second node; and
the second node is configured to generate a codebook library according to the codebook configuration information and the codebook library calculation parameter, and the codebook library comprises one or more codebooks.

19. A codebook generation system, **characterized in that** the codebook generation system comprises a core network element, a first node, a second node and a back-end management server;

the back-end management server is configured to send codebook configuration information to the second node;
the first node is configured to send a codebook library calculation parameter to the second node;
the second node is configured to send the codebook configuration information and the codebook library calculation parameter to the core network element; and
the core network element is configured to generate a codebook library according to the codebook configuration information and the codebook library calculation parameter, and the codebook library comprises one or more codebooks.

20. A codebook generation system, **characterized in that** the codebook generation system comprises a third-party server, a first node, a second node and a back-end management server;

the back-end management server is configured to send codebook configuration information to the second node; the first node is configured to send a codebook library calculation parameter to the second node; the second node is configured to send the codebook configuration information and the codebook library calculation parameter to the third-party server; and the third-party server is configured to generate a codebook library according to the codebook configuration information and the codebook library calculation parameter, and the codebook library comprises one or more codebooks.

21. A codebook generation system, **characterized in that** the codebook generation system comprises: a back-end management server, a first node and a second node;

the first node is configured to send a codebook library calculation parameter to the second node; the second node is configured to send the codebook library calculation parameter to the back-end management server; and the back-end management server is configured to generate a codebook library according to the codebook library calculation parameter and codebook configuration information, and the codebook library comprises one or more codebooks.

22. A codebook generation system, **characterized in that** the codebook generation system comprises: a back-end management server, a first node, a second node and a third-party server;

the back-end management server is configured to send codebook configuration information to the second node; the second node is configured to send the codebook configuration information to the first node; the first node is configured to send a codebook library calculation parameter and the codebook configuration information to the third-party server; and the third-party server is configured to generate a codebook library according to the codebook configuration information and the codebook library calculation parameter, and the codebook library comprises one or more codebooks.

23. A codebook generation system, **characterized in that** the codebook generation system comprises: a back-end management server and a second node;

the back-end management server is configured to send codebook configuration information and a codebook library calculation parameter to the second node; and the second node is configured to generate a codebook library according to the codebook configuration information and the codebook library calculation parameter sent from the back-end management server, and the codebook library comprises one or more codebooks.

24. A codebook generation system, **characterized in that** the codebook generation system comprises: a back-end management server, a second node and a core network element;

the back-end management server is configured to send codebook configuration information and a codebook library calculation parameter to the second node; the second node is configured to send the codebook configuration information and the codebook library calculation parameter to the core network element; and the core network element is configured to generate a codebook library according to the codebook configuration information and the codebook library calculation parameter sent from the second node, and the codebook library comprises one or more codebooks.

25. A codebook generation system, **characterized in that** the codebook generation system comprises: a back-end management server, a second node and a third-party server;

the back-end management server is configured to send codebook configuration information and a codebook library calculation parameter to the second node;

the second node is configured to send the codebook configuration information and the codebook library calculation parameter to the third-party server; and

the third-party server is configured to generate a codebook library according to the codebook configuration information and the codebook library calculation parameter sent from the second node, and the codebook library comprises one or more codebooks.

FIG. 1

FIG. 2

FIG. 3

A codebook generation apparatus acquires codebook library calculation parameters and codebook configuration information of a first node — S201

The codebook generation apparatus generates a codebook library on the basis of the codebook library calculation parameters and the codebook configuration information — S202

FIG. 4

| Parameter providing apparatus | Codebook generation apparatus |
|---|---|

S201, codebook library calculation parameter and codebook configuration information

S202, the codebook generation apparatus generates a codebook library based on the codebook library calculation parameter and the codebook configuration information

FIG. 5

```
┌─────────────────────────┐                    ┌─────────────────────────┐
│  Codebook generation    │                    │   Codebook storage      │
│       apparatus         │                    │       apparatus         │
└─────────────────────────┘                    └─────────────────────────┘
```

S201, acquire a codebook library calculation parameter and codebook configuration information of a first node

S202, the codebook generation apparatus generates a codebook library based on the codebook library calculation parameter and the codebook configuration information

S203, all or some of codebooks in the codebook library

**FIG. 6**

Codebook configuration information

Codebook set

Back-end management server

Second node

First node

Codebook set

Codebook library calculation parameter

Codebook generation apparatus

**FIG. 7**

Back-end management server

Codebook configuration information

Codebook set

Codebook library

Codebook set

Core network element

Second node

First node

Codebook library calculation parameter and codebook configuration information

Codebook library calculation parameter

Codebook generation apparatus

**FIG. 8**

## FIG. 9

Back-end management server — Codebook library → Second node — Codebook set → First node

Codebook library calculation parameter (Second node → Back-end management server)

Codebook library calculation parameter (First node → Second node)

Back-end management server → Codebook generation apparatus

## FIG. 10

Back-end management server

Codebook configuration information (Back-end management server → Second node)

Codebook set (Second node → Back-end management server)

Third-party server — Codebook library → Second node — Codebook set → First node

Codebook library calculation parameter and codebook configuration information (Second node → Third-party server)

Codebook library calculation parameter (First node → Second node)

Third-party server → Codebook generation apparatus

## FIG. 11

Back-end management server

Codebook configuration information (Back-end management server → Second node)

Codebook library/codebook set, Codebook configuration information (Second node → Back-end management server)

Second node — Codebook configuration information → First node — Codebook library calculation parameter and codebook configuration information → Third-party server

Codebook library/codebook set (First node → Second node)

Codebook set/codebook library (Third-party server → First node)

Third-party server → Codebook generation apparatus

Codebook library
calculation parameter and
codebook configuration
information

Codebook set

Back-end
management
server

Second node

First node

Codebook set

Codebook
generation
apparatus

FIG. 12

Back-end
management
server

Codebook library
calculation parameter and
codebook configuration
information

Codebook set

Codebook
library

Core network
element

Second node

Codebook set

First node

Codebook library
calculation parameter and
codebook configuration
information

Codebook
generation
apparatus

FIG. 13

Back-end
management
server

Codebook library
calculation parameter and
codebook configuration
information

Codebook set

Codebook
library

Third-party
server

Second node

Codebook set

First node

Codebook library
calculation parameter and
codebook configuration
information

Codebook
generation
apparatus

FIG. 14

Codebook generation
apparatus 300

Acquisition module — 301

Generation module — 302

Communication module — 303

FIG. 15

400

402      403

404      Processor      Communication interface

Bus

Memory

401

FIG. 16

## INTERNATIONAL SEARCH REPORT

| International application No. |
| --- |
| **PCT/CN2024/098382** |

**A. CLASSIFICATION OF SUBJECT MATTER**

H04B7/0456(2017.01)i

According to International Patent Classification (IPC) or to both national classification and IPC

**B. FIELDS SEARCHED**

Minimum documentation searched (classification system followed by classification symbols)

IPC: H04B,H04L,H04W

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT, 3GPP: 波束指示, 码本, 覆盖, 智能发射面, beam indication, codebook, coverage, Reconfigurable Intelligent Surface

**C. DOCUMENTS CONSIDERED TO BE RELEVANT**

| Category* | Citation of document, with indication, where appropriate, of the relevant passages | Relevant to claim No. |
| --- | --- | --- |
| A | US 2015117561 A1 (NTT DOCOMO INC.) 30 April 2015 (2015-04-30) description, paragraphs 51-83 | 1-25 |
| A | CN 110061767 A (RESEARCH INSTITUTE OF CHINA MOBILE COMMUNICATIONS CORP. et al.) 26 July 2019 (2019-07-26) description, paragraphs 44-58, and figure 1 | 1-25 |
| A | CN 110999106 A (APPLE INC.) 10 April 2020 (2020-04-10) description, paragraphs 81-163, and figures 5-6 | 1-25 |
| A | CN 115842612 A (ZTE CORP.) 24 March 2023 (2023-03-24) entire document | 1-25 |
| A | CN 116325549 A (QUALCOMM INC.) 23 June 2023 (2023-06-23) description, paragraphs 111-124, and figures 5-6 | 1-25 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2024** | **30 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/098382**

| Patent document cited in search report | | | Publication date (day/month/year) | Patent family member(s) | | | Publication date (day/month/year) |
|---|---|---|---|---|---|---|---|
| US | 2015117561 | A1 | 30 April 2015 | US | 9209878 | B2 | 08 December 2015 |
| | | | | JP | 2013236168 | A | 21 November 2013 |
| | | | | JP | 5899043 | B2 | 06 April 2016 |
| | | | | WO | 2013168555 | A1 | 14 November 2013 |
| | | | | EP | 2849373 | A1 | 18 March 2015 |
| | | | | EP | 2849373 | A4 | 20 January 2016 |
| CN | 110061767 | A | 26 July 2019 | None | | | |
| CN | 110999106 | A | 10 April 2020 | DE | 112018000196 | T5 | 05 September 2019 |
| | | | | US | 2020186207 | A1 | 11 June 2020 |
| | | | | US | 10924163 | B2 | 16 February 2021 |
| | | | | EP | 3635876 | A1 | 15 April 2020 |
| | | | | WO | 2018226581 | A1 | 13 December 2018 |
| CN | 115842612 | A | 24 March 2023 | WO | 2023207659 | A1 | 02 November 2023 |
| CN | 116325549 | A | 23 June 2023 | WO | 2022081384 | A1 | 21 April 2022 |
| | | | | US | 2024163856 | A1 | 16 May 2024 |
| | | | | EP | 4229772 | A1 | 23 August 2023 |
| | | | | US | 2022124714 | A1 | 21 April 2022 |
| | | | | US | 11800504 | B2 | 24 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310793275